Europäisches Patentamt

(19) **European Patent Office**

Office européen des brevets

(11) Veröffentlichungsnummer: **0 143 103**
**B1**

(12) **EUROPÄISCHE PATENTSCHRIFT**

(45) Veröffentlichungstag der Patentschrift:
**13.05.87**

(51) Int. Cl.⁴: **A 47 J 19/06**, A 47 J 19/02

(21) Anmeldenummer: **84890161.7**

(22) Anmeldetag: **29.08.84**

(54) **Handpresse für Gemüse oder Früchte.**

(30) Priorität: 31.08.83 AT 3119/83
24.07.84 AT 2393/84

(73) Patentinhaber: **Ahner, Reinhard, Dipl.-Kfm.,
Wolfganggasse 25, A-1120 Wien (AT)**

(43) Veröffentlichungstag der Anmeldung:
**29.05.85 Patentblatt 85/22**

(72) Erfinder: **Ahner, Reinhard, Dipl.-Kfm., Wolfganggasse 25,
A-1120 Wien (AT)**

(45) Bekanntmachung des Hinweises auf die Patenterteilung:
**13.05.87 Patentblatt 87/20**

(74) Vertreter: **Köhler-Pavlik, Johann, Dipl.-Ing.,
Margaretenplatz 5, A-1050 Wien (AT)**

(84) Benannte Vertragsstaaten:
**BE CH DE FR GB IT LI NL SE**

(56) Entgegenhaltungen:
**CH - A - 94 658
DE - B - 1 255 877
DE - C - 618 030
FR - A - 1 202 612
US - A - 1 762 031
US - A - 1 840 182
US - A - 2 297 342
US - A - 4 069 752**

**Beschreibung**

Die Erfindung betrifft eine Handpresse für Gemüse oder Früchte mit zwei Hebeln, die miteinander gelenkig verbunden sind und zumindest mit einem Teil ihrere Länge als Griffe dienen, wobei der eine Hebel einen mit Durchlassöffnungen im Boden für das Pressgut versehenen Pressraum zum Einlegen des auszupressenden Gutes und der andere einen beim Verschwenken der Hebel in den Pressraum eindringenden Drücker aufweist, wobei mindestens zwei Pressräume vorgesehen sind.

Handpressen dieser Art werden vor allem zum Pressen von Knoblauch und Zwiebel für das Würzen der Speisen verwendet.

Die US-A-1 762 031 beschreibt eine Presse der erwähnten Bauart, bei welcher der eine Hebel einen durch eine mittige Schneidewand in zwei Hälften unterteilten Pressraum besitzt.

Durch die US-A-1 840 182 ist eine Fruchtpresse bekannt geworden, bei welcher ein Pressbehälter mit zwei durch eine Zwischenwand voneinander getrennten Presskammern auf einem Ständer befestigt und mit einem handbetätigten, am Pressbehälter angelenkten Hebel versehen ist, an dem zwei Drücker durch einen gemeinsamen sie verbindenden gegabelten Arm angelenkt sind. Die auszudrückende Frucht z.B. eine Orange wird in zwei Hälften soweit zerschnitten, dass die Hälften noch mit einem Stück der Schale zusammenhängen. Sodann werden die beiden Hälften in die Pressräume gelegt, wobei der zusammenhängende Rest der Schale über die Zwischenwand zu liegen kommt. Schliesslich ist durch die DE-B-1 255 877 ein aus Kunststoff bestehendes Gerät zum Schneiden und Pressen von Früchten und Gemüsen mit einem Pressenfuss bekannt geworden, an dem ein Presshebel schwenkbar gelagert ist, der eine Pressplatte trägt, welche sich bei Betätigung des Presshebels in einem im Pressenfuss angeordneten Pressrahmen gegen einen in diesem auswechselbar angeordneten Schneid- oder Lochplatteneinsatz bewegt.

Mit den bekannten Geräten kann die Frucht oder das Gemüse nur mit einem einzigen Feinheitsgrad ausgepresst werden. Es hat sich jedoch gezeigt, dass bei den Speisen je nach Zubereitung und/oder je nach Frucht (Knoblauch meist feiner, Zwiebel meist gröber, weshalb bisher zwei verschiedene Pressen erforderlich waren) — gegrillt, gekocht, gebraten usw. — und je nach Art der Beigabe des Pressgutes, z.B. als Würze, Garnierung usw. unterschiedliche Feinheitsgrade erwünscht sind. Hiebei reichen zumeist die Grade fein oder grob aus.

Die vorliegende Erfindung stellt sich zur Aufgabe unter Vermeidung der Nachteile der bekannten Geräte eine Handpresse zu schaffen, bei welcher das zu pressende Gut gleichzeitig oder in beliebiger Folge fein und bzw. oder grob gepresst werden kann.

Diese Aufgabe wird bei einer Handpresse der eingangs erwähnten Art dadurch gelöst, dass erfindungsgemäss die Pressräume mit unterschiedlichen Öffnungen im Boden versehen sind.

Um auch die Möglichkeit einer Reinigung der Löcher im Boden der Pressräume zu bieten, ist nach einem weiteren Merkmal der Erfindung mindestens einer der Hebel mit Reinigungsstiften versehen, wobei mehrere Sätze von Reinigungsstiften vorgesehen sein können, von denen je ein Satz je einer Öffnungsgruppe entspricht, so dass beim Verschwenken der Hebel entgegen der Pressrichtung die Stifte in die Öffnungen des benützten Pressraumes eindringen.

Wohl ist durch die AT-B-294 351 die Verwendung von Reinigungsstiften bekannt geworden. Doch ist bei dem bekannten Gerät nur eine Lochart vorgesehen, demzufolge auch nur eine Stiftart benötigt wird. Würde eine derartige Stiftart bei der erfindungsgemässen Handpresse verwendet werden, könnten die Stifte nur jenen Lochsatz reinigen, welcher für den verwendeten Stiftsatz bestimmt ist, während die anderen Löcher nur unzureichend gereinigt werden könnten, oder die Stifte könnten bei einem grösseren Durchmesser als die Löcher in diese nicht eindringen.

Weitere Einzelheiten der Erfindung werden anhand der Zeichnung näher erläutert, in welcher eine Mehrzahl von Ausführungsbeispielen der erfindungsgemässen Handpresse dargestellt sind.

Es zeigen:

Fig. 1 eine Seitenansicht der Handpresse im halboffenen Zustand,

Fig. 2 eine Draufsicht derselben im offenen Zustand,

Fig. 3 einen Längsschnitt der Handpresse zu Beginn der Presstätigkeit,

Fig. 4 eine zweite Ausführungsform der Handpresse in gestreckter Lage,

Fig. 5 die Presse nach Fig. 4 im Längsschnitt,

Fig. 6 eine weitere Ausführungsform der Handpresse,

Fig. 7 einen Schnitt nach den Linien VII-VII nach Fig. 6,

Fig. 8 einen Schnitt nach den Linien VIII-VIII nach Fig. 6,

Fig. 9 eine Draufsicht der Handpresse nach Fig. 6 bzw. Fig. 8, die

Fig. 10 und 11 einen Längsschnitt bzw. eine Druntersicht einer weiteren Ausführungsform der Handpresse mit einarmigen Hebeln, die

Fig. 11 bis 14 eine weitere Ausbildung der Handpresse mit einarmigen Hebeln und nebeneinanderliegenden Pressräumen, wobei Fig. 12 einen Schnitt nach der Linie XII-XII der Fig. 13, Fig. 13 eine Draufsicht und Fig. 14 eine Druntersicht der Presse darstellt,

Fig. 15 einen Schnitt nach der Linie XV-XV der Fig. 16, welche eine Draufsicht einer weiteren Ausführungsform der erfindungsgemässen Handpresse darstellt,

Fig. 17 eine Unteransicht in Pfeilrichtung A der Fig. 15,

Fig. 18 eine Draufsicht einer weiteren Ausführungsform der Handpresse im offenen Zustand,

Fig. 19 einen Längsschnitt derselben nach der Linie XVIII-XVIII der Fig. 18 in der Stellung der Handpresse am Ende des Pressvorgangs,

Fig. 20 einen Längsschnitt derselben in einer zweiten Ausführungsform, wobei die Handpresse in den beiden letzteren Figuren am Ende Pressvorgangs sind,

Fig. 21 einen auswechselbaren Boden eines Pressraumes in Draufsicht,

Fig. 22 einen Teil eines Pressraumes mit eingesetztem Boden im Querschnitt,

Fig. 23 einen Teil eines Drückers mit austauschbarem Einsatz im Querschnitt,

Fig. 24 das pressseitige Ende eines Drückers od. dgl. mit Einsatz, welcher Messer, Leisten od. dgl. trägt, und

Fig. 25 eine weitere Ausführungsform der Handpresse in Draufsicht auf den die Pressräume aufweisenden Hebel.

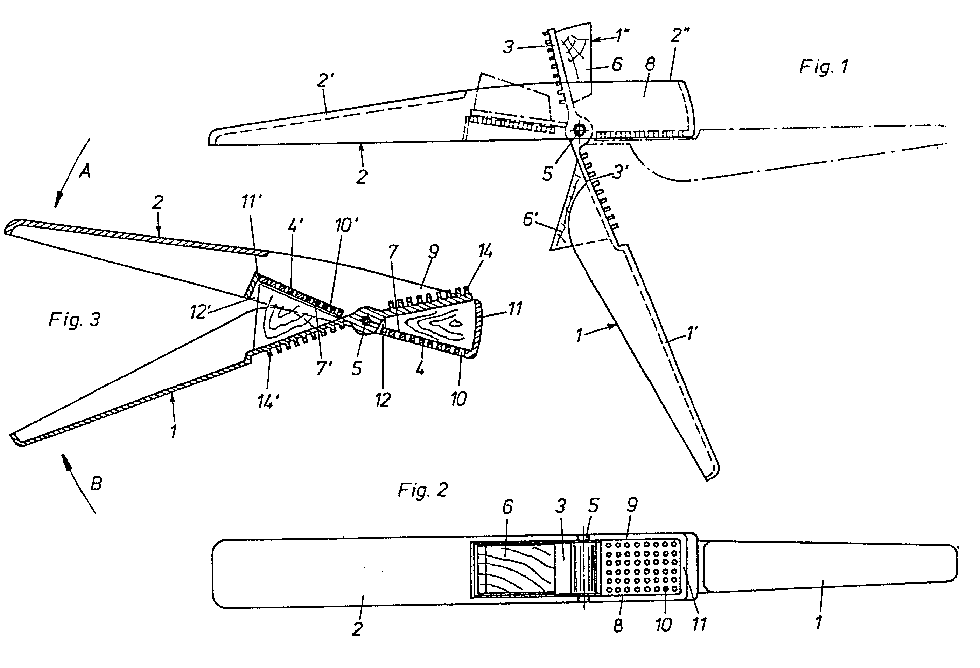

Die Handpresse nach den Figuren 1 bis 3 besteht aus zwei doppelarmigen, bei 5 miteinander gelenkig verbundenen Hebeln 1, 2 mit ungleich langen Armen, von welchen die längeren 1', 2' als Griffteile und die kürzeren 1'', bzw. 2'' als Drücker 3 bzw. Siebteil 4 dienen. Zum Drücker 3 ist bezüglich des Gelenkes 5 diagonal gegenüberliegend der Griffteil 1' im Anschluss an das Gelenk 5 ebenfalls als Drücker 3' ausgebildet. Ebenso ist der Griffteil 2' im Anschluss an das Gelenk mit einem dem Siebteil 4 gegenüberliegenden Siebteil 4' versehen. Die den Siebteilen 4, 4' zugekehrten Seiten der Drücker 3 bzw. 3' sind mit je einem Presskolben 6 bzw. 6' versehen. Das bei 5 vorgesehene Gelenk kann allenfalls lösbar ausgebildet sein, so dass die beiden Hebel 1, 2 zu Reinigungszwecken voneinander getrennt werden können. Die Siebteile 4, 4' besitzen je einen Boden 7, 7' wobei in der Presstellung der Boden 7 und der Presskolben 6 sowie der Boden 7' und der Presskolben 6' aufeinander zu liegen kommen. Von den Böden 7 und 7' stehen seitlich und stirnseitig Wände 8, 9, 11 bzw. 8', 9', 11' ab, welche mit den zugehörigen Böden 7 bzw. 7' einen Pressraum 12 bzw. 12' zum Einlegen des auszupressenden Gutes dienen. Hiebei sind die Böden 7 und 7' mit Durchbrechungen 10 bzw. 10', z.B. runden Löchern, versehen, wobei die Durchbrechungen des einen Bodens grösser und bzw. oder anders als die des anderen Bodens gestaltet sind. Die beiden Drücker 3, 3' besitzen an ihrer in der Presstellung den Durchbrechungen 10, 10' abgekehrten Seite Stifte 14, bzw. 14', welche in der in Fig. 1 strichpunktiert dargestellten Strecklage der beiden Hebel 1, 2 von der Rückseite der Böden 7, 7' in deren Löcher 10, 10' eindringen und dadurch die in den Durchbrechungen nach dem Auspressen des Gutes verbliebenen Reste in den Pressraum 12, 12' durchdrücken und damit alle Löcher gleichzeitig reinigen.

Die beschriebene Handpresse funktioniert in folgender Weise: Werden die beiden Griffe 1, 2 nach Einlegen eines auszupressenden Gutes in den Pressraum 12 in den Richtungen der in Fig. 3 dargestellten Pfeile A, B zusammengedrückt, drückt der Kolben 6 das Pressgut durch den Boden 7 bzw. dessen Durchbrechungen 10 oder Löcher durch. Werden die Hebel 1, 2 in eine Strecklage nach Fig. 2 gebracht, dringen die Stifte 14 in die Durchbrechungen 10 und drücken die darin verbliebenen Reste in den Pressraum 12. Soll nun ein Gut im Pressraum 12' ausgedrückt werden, dreht man das Gerät aus der in Fig. 3 dargestellten Lage um seine Längsachse um 180°, so dass der Boden 7' nach unten zu liegen kommt und der Kolben 6' von oben in den Pressraum 12' eindringt. Der übrige Vorgang ist der gleiche wie der zuvor beschriebene.

Um den Pressraum 12 leichter reinigen zu können, besteht die Möglichkeit, eine der Seitenwände 8 oder 9, wie im österreichischen Patent Nr. 337 392 näher beschrieben ist, von Siebteil 4 bzw. 4' auf die in der Presstellung gleiche Seite des Drückers 3 bzw. 3' zu verlegen. Dadurch ist der Pressraum 12 bzw. 12' nach der einen Seite hin offen, nach welcher Reste aus dem Pressraum mit einer Bürste od. dgl. ausgetragen werden können. Bei dieser Ausführungsform schliesst sich der Pressraum beim Pressvorgang sobald die oben erwähnte Seitenwand des Drückers 3 bzw. 3' den Boden 7 bzw. 7' des zugehörigen Siebteiles 4 bzw. 4' zu übergreifen beginnt.

Bei den beschriebenen Ausführungsbeispielen ist der eine Pressraum 12 am kürzeren Arm 2'' angeordnet, während der andere Pressraum 12' auf der gegenüberliegenden Seite des Gelenkes 5 im Anschluss daran am längeren Arm 2' vorgesehen ist. Hiebei kann jedoch jeweils nur ein Pressraum ausgenützt werden.

Falls jedoch gewünscht ist, beide Pressräume gleichzeitig auszunützen, kann in Abänderung der beiden zuvor beschriebenen Ausführungsbeispiele zumindest der kürzere Arm 1'' und 2'' der beiden Hebel 1, 2 breiter, z.B. doppelt so breit ausgeführt werden, so dass die beiden Pressräume 12, 12' nebeneinander zu liegen kommen können und durch eine gemeinsame Seitenwand voneinander getrennt werden, wobei ein breiter durch einen Schlitz, welcher etwas breiter als die Wanddicke der zuvor erwähnten Trennwand ist, in zwei Teile unterteilter Drücker vorgesehen wird, dessen Teile allenfalls mit einem Presskolben gleichzeitig in beide Pressräume 12, 12' eindringen können. Analog sind die Reinigungsstifte 14' 14' auf der Rückenseite der Drücker 3, 3' vorgesehen, wobei bei allen Ausführungsbeispielen die Dicke der Stifte entsprechend der Grösse der Öffnungen angepasst ist.

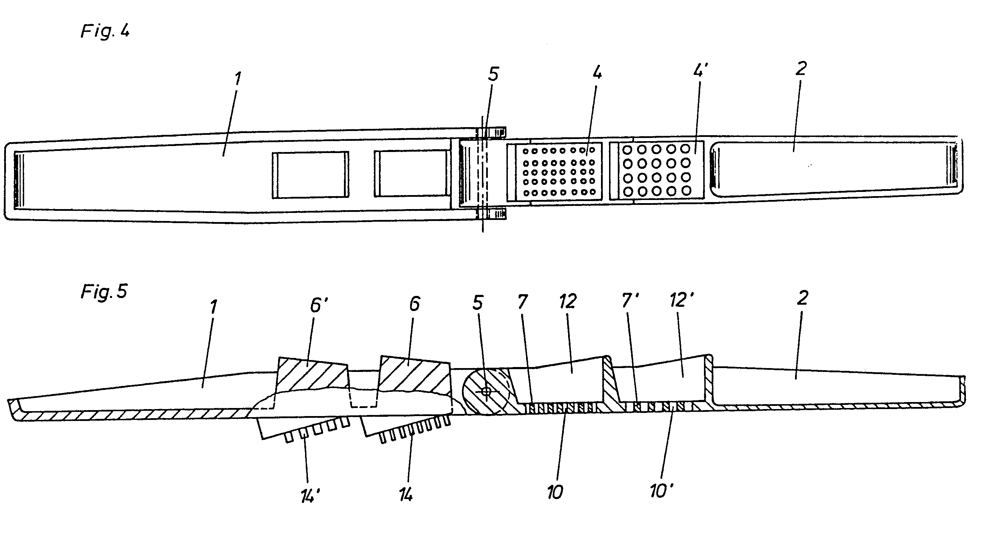

Eine weitere Variante der erfindungsgemässen Handpresse besteht aus zwei einarmigen Hebeln 1, 2, die, wie Fig. 4 zeigt, an ihrem einen Ende um das Gelenk 5 schwenkbar gelagert ist. Bei dieser Ausführungsform besitzt der Hebel 2 im Anschluss an das Gelenk 5 zwei hintereinander angeordnete Pressräume 12, 12' mit je einem Boden 7 bzw. 7', wobei der eine Boden kleinere bzw. grössere Durchbrechungen bzw. Löcher als der andere Boden hat. Den beiden Pressräumen gegenüberliegend ist im Hebel 1 je ein Drücker, Presskolben, Stössel oder dgl. vorgesehen, welcher beim Zusammendrücken der beiden Hebel in den ihm zugeordneten Pressraum 12 bzw. 12' eindringt. Auf der jedem Drücker, Presskolben, Stössel od. dgl. abgekehrten Aussenseite bzw. Rückenabschnitt des Hebels 1 ist je ein Stiftensatz 14 bzw. 14' zum Reinigen der Durchbrechungen 10 bzw. 10', wenn die Hebel 1 bzw. 2 um das Gelenk 5 herumgeschwenkt werden, so dass die Stifte 14, 14' von der Aussenseite der Böden 7, 7' her in die Durchbrechungen eindringen und die Rückstände in die Pressräume 12 bzw. 12' zurückdrücken. Wie bei den früher beschriebenen Ausführungsbeispielen können auch im vorliegenden Falle die Pressräume 12, 12' nebeneinander angeordnet sein. Weiters können in beiden Fällen je eine aussen liegende Seitenwand eines jeden Pressraumes 12 bzw. 12' entfernt und auf den anderen Hebel 1 verlegt werden.

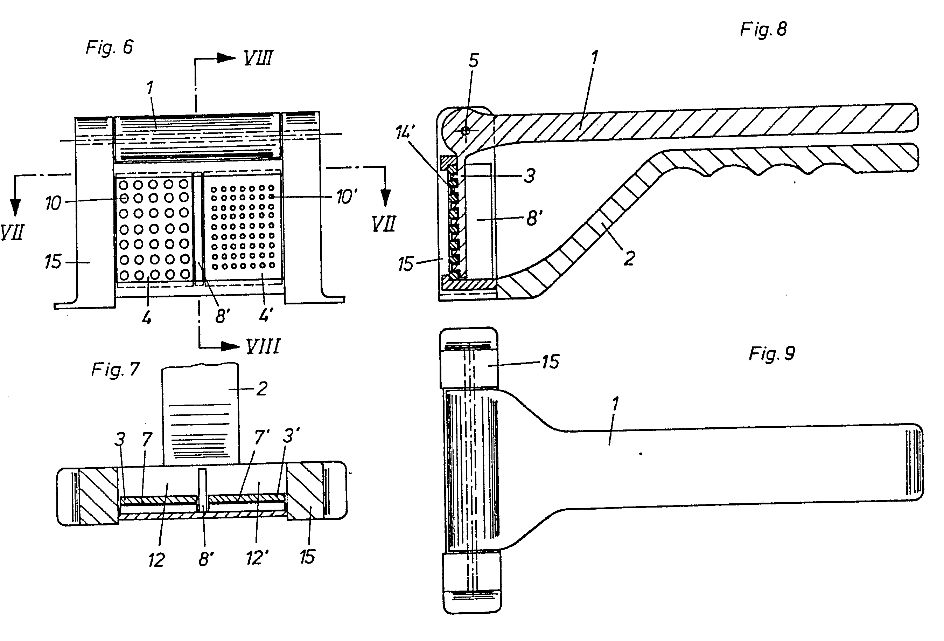

Weiters können bei der Ausbildung des Gerätes mit einarmigen Hebeln 1, 2 die Böden 7, 7′, wie Fig. 6 zeigt, stirnseitig vorhanden sein und sich über zwei durch eine Wand getrennte Pressräume erstrecken, wobei jedem Raum eine Lochung mit einer anderen Lochgrösse zugeordnet sein kann. Bei diesem Ausführungsbeispiel ist der den oder die Drücker 3, 3′ aufweisende Hebel 1 am oberen Rand eines die Böden 7, 7′ umschliessenden, vorzugsweise rechteckigen, z.B. quadratischen Rahmens 15 angelenkt, welcher vom Hebel 2 getragen ist. Der Drücker kann einen Schlitz aufweisen, welcher beim Pressvorgang die Trennwand 8′ aufnimmt, so dass jeder der beiden Teile des Drückers in je einen Pressraum 12 bzw. 12′ eingreift. Bei dieser Ausführungsform sind die Drücker 3 bzw. 3′ mit in die Löcher 10 bzw. 10′ eingreifenden Stiften 14′ versehen. Es besteht aber auch die Möglichkeit, ähnlich wie bei den früheren Ausführungsformen, diese Stifte am Rücken des Hebels 1 vorzusehen, so dass sie von der Aussenseite in die Löcher 10, 10′ eingreifen.

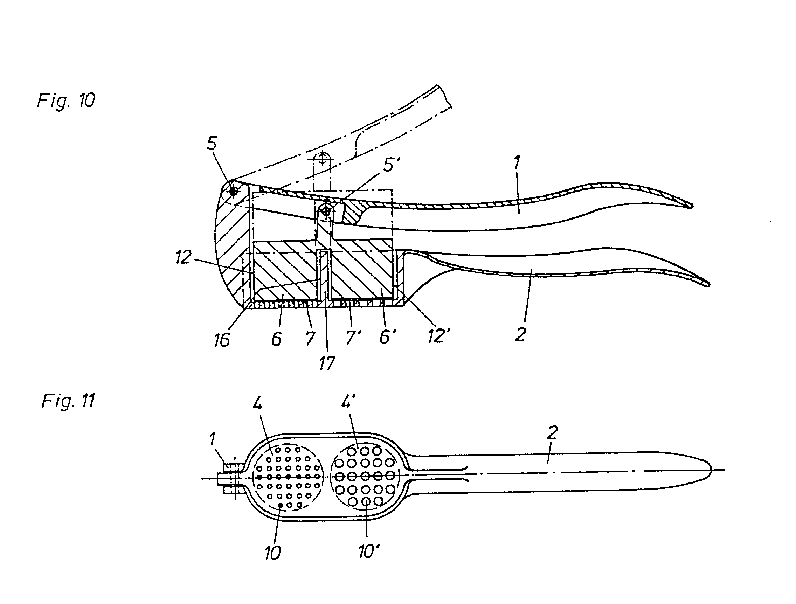

Es besteht auch die Möglichkeit, den Drücker beliebig auszubilden, so z.B. als Pressstempel, welcher gelenkig am Hebel 1 befestigt ist. Eine derartige Ausführungsform zeigen die Fig. 10 und 11. Bei dieser Ausführungsform ist der Pressstempel bei 5′ am Hebel 1 angelenkt und durch einen Schlitz 16 in die beiden Presskolben 6, 6′ unterteilt, die beim Eingreifen in die Presskammern 12, 12′ die Trennwand 17 im Schlitz 16 aufnehmen. Bei entsprechender Anordnung der Gelenke 5, 5′ können am Rücken des Hebels 1 Stifte zur Reinigung der Löcher 10, 10′ vorhanden sein.

Weiters ist es möglich, für jeden Pressraum 12 bzw. 12′ einen eigenen oder einen gemeinsamen Pressstempel zu verwenden und dementsprechend die Wände der Pressräume auszubilden, damit der Pressstempel wahlweise in jeden Pressraum eingesetzt werden kann.

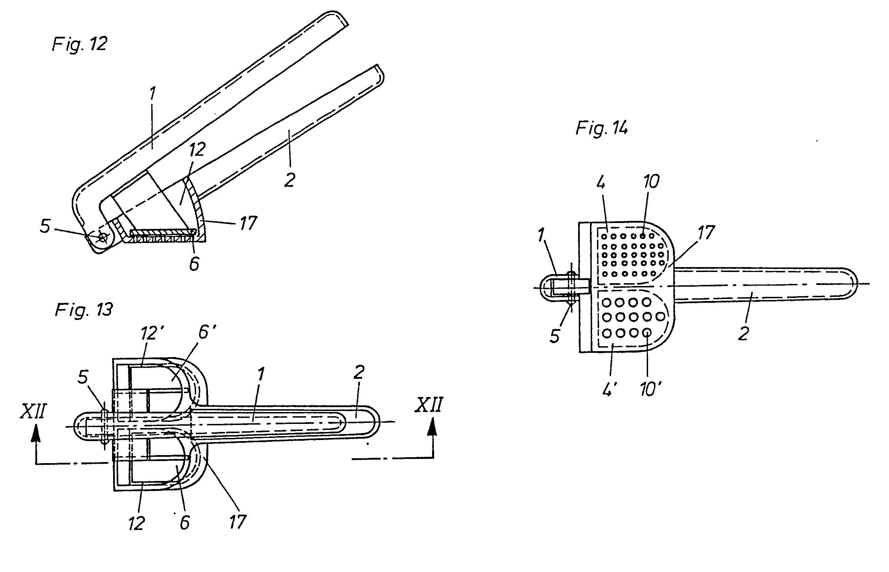

Bei der Ausführungsform nach den Fig. 12 bis 14 sind die Pressräume 12, 12′ nebeneinander angeordnet und von je einem Presskolben 6, 6′ betätigt. Am Rücken des Hebels 1 können Stifte zur Reinigung der Durchbrechungen 10, 10′ von aussen her vorgesehen sein.

Im Rahmen der Erfindung ist es aber auch denkbar, den Pressstempel verstellbar am Hebel 1 anzuordnen.

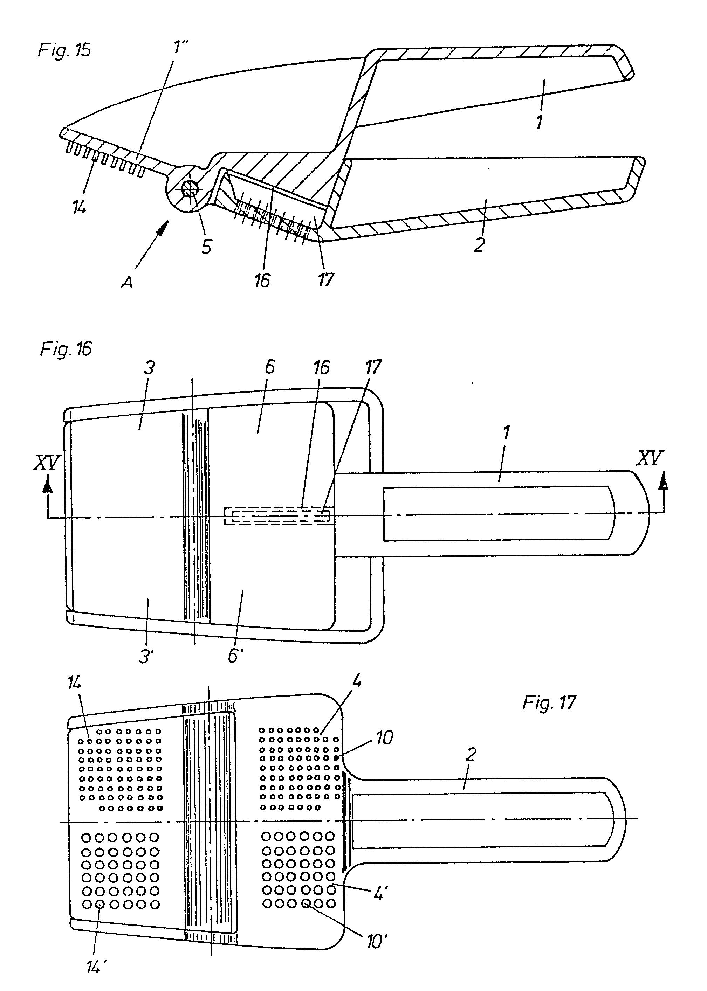

Die Fig. 15 bis 17 zeigen eine Kombination eines zweiarmigen mit einem einarmigen Hebel, wobei der einarmige Hebel 2 die beiden nebeneinander gelegenen Siebteile 4, 4′ mit durch eine Trennwand 17 unterteilten Pressräumen besitzt, deren Böden die Durchbrechungen 10 bzw. 10′ aufweisen. Am pressseitigen Ende des einarmigen Hebels 2 befindet sich das Gelenk 5, um welches der zweiarmige Hebel 1 schwenkbar gelagert ist, welcher die beiden Kolben 6, 6′ trägt, welche durch einen Schlitz 16 voneinander getrennt sind, in welchen die Trennwand 17 in der Pressstellung der beiden Hebel 1, 2 eintritt. Auf der Aussenfläche des kürzeren Armes 1′′ sind die Stifte 14, 14′ vorgesehen, welche in der Strecklage der beiden Hebel 1, 2 von aussen in die Durchbrechungen 10, 10′ zur Reinigung derselben treten.

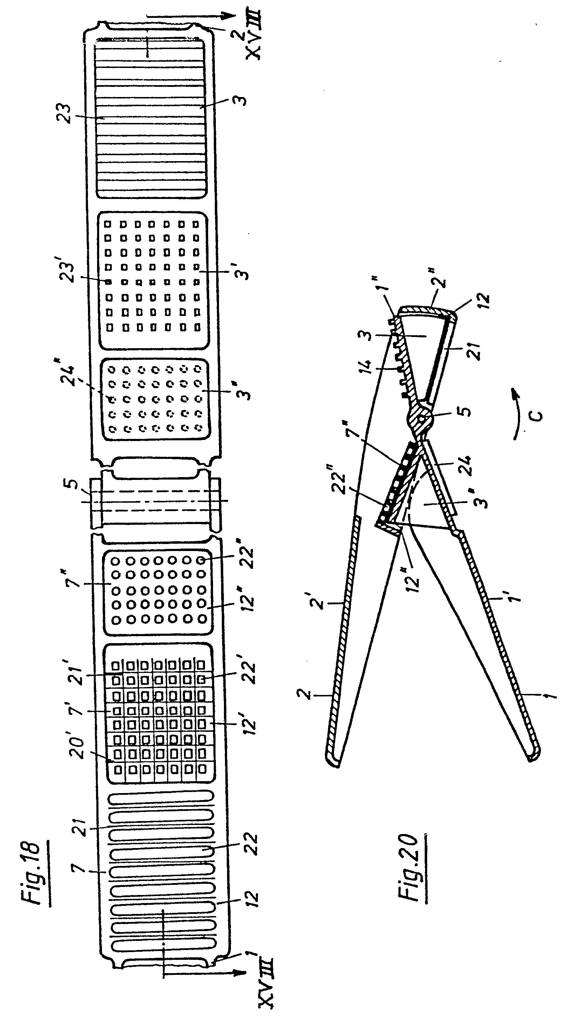

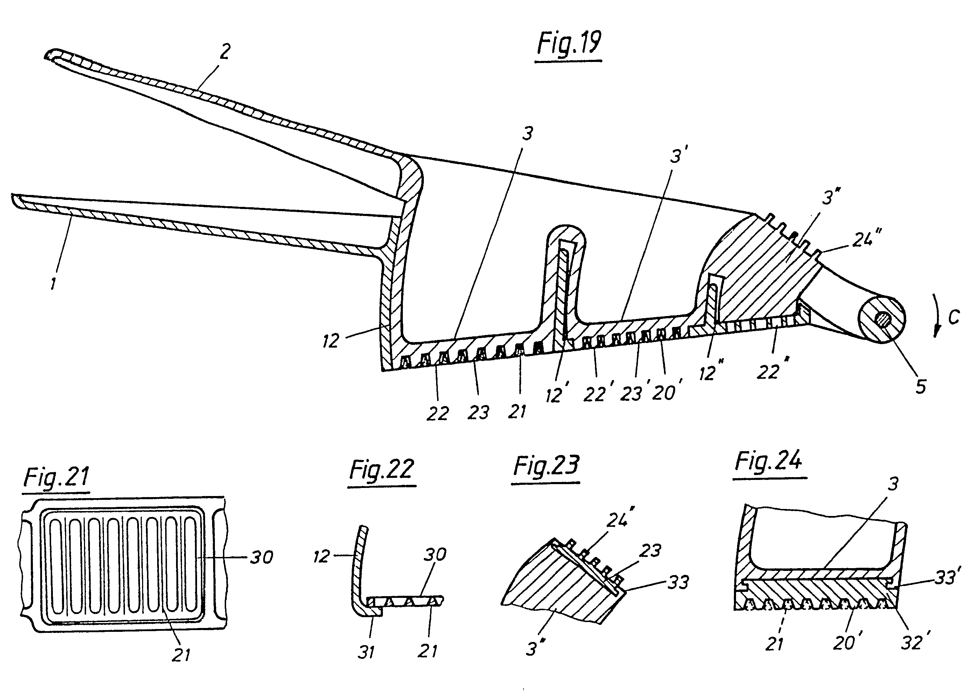

Bei der Ausführungsform nach den Fig. 18 und 19 sind die beiden Hebel 1, 2 einarmig ausgebildet, wobei der Hebel 1 im Anschluss an das Gelenk 5 drei hintereinander angeordnete Pressräume 12, 12′, 12′′ mit je einem Boden 7, bzw. 7′ bzw. 7′′ aufweist, und der eine Boden 7 aus nur in einer Richtung, im vorliegenden Fall in der Querrichtung verlaufenden Messern 21, und der andere 7′ aus kreuz und quer angeordneten Messern 20′, 21′ besteht, während der dritte Boden mit siebartigen Löchern 22′′ versehen ist. Beim Pressraum 12 entstehen zwischen den Messern 21 schlitzförmige und beim Pressraum 12′ zwischen den Messern 20′, 21′ quadratische Zwischenräume 22, bzw. 22′ um das Gut blättrig, oder prismatisch auszupressen, während im Pressraum 12′′ entsaftet wird. Den drei Pressräumen 12, 12′, 12′′ gegenüberliegend ist im Hebel 2 je ein Drücker, Presskolben, Stössel od. dgl. 3 bzw. 3′ bzw. 3′′ vorgesehen, welcher auf seiner Oberfläche glatt oder bei den Ausführungsformen des Bodens 7 und 7′ der Pressräume 12, 12′, wie in Fig. 18 strichliert oder in Fig. 19 voll und im Schnitt dargestellt, mit Erhebungen 23, 23′ ausgestattet sein kann, die den korrespondierenden Zwischenräumen 22 bzw. 22′ entsprechen, so dass diese Erhebungen am Ende des Pressvorganges in diese Zwischenräume 22 bzw. 22′ eindringen und das Pressgut aus diesen hinausdrücken.

Wie Fig. 19 zeigt, sind an der dem Drücker 3′′ abgekehrten Teil der Rückseite des Hebels 2 Erhebungen 24′′ vorgesehen, welche nach dem Herumschwenken des Hebels 2 um das Gelenk 5 in der Richtung des Pfeiles C (Fig. 19) in die Löcher 22′′ eindringen und diese von dort verbliebenen Resten der Früchte oder des Gemüses befreien. Korrespondierende Erhebungen können natürlich an der Rückseite des Hebels 2 auch zur zusätzlichen Reinigung der Zwischenräume 22 und 22′ vorgesehen sein.

Bei der Ausführungsform der Handpresse nach Fig. 20 sind die beiden Hebel 1, 2 doppelarmig und im vorliegenden Fall mit ungleich langen Armen ausgestattet, von welchen die längeren 1′, 2 als Griffteile und die kürzeren 1′′ bzw. 2′′ mit einem Drücker, Presskolben, Stössel od. dgl. 3 oder mit einem Pressraum 12 versehen sind. Zum Drücker, Presskolben, Stössel od. dgl. 3 ist bezüglich des Gelenkes 5 diagonal gegenüberliegend der Griffteil 1′ im Anschluss an das Gelenk 5 ebenfalls mit einem Drücker, Presskolben, Stössel od. dgl. 3′′ ausgestattet. Ebenso ist der Griffteil 2′ im Anschluss an das Gelenk 5 mit einem Pressraum 12′′ versehen. Im vorliegenden Fall ist der Pressraum 12′′ bodenseitig mit runden Löchern 22′ und der Pressraum 12 mit Längsmessern 21 versehen, so dass der Pressraum 12 zum blättrigen Schneiden der Frucht oder des Gemüses dient, während im Pressraum 12′ die Frucht oder das Gemüse entsaftet oder zerdrückt wird. Zum Reinigen der Löcher 22′′ ist der kürzere Arm 1′′ an seiner beim Verschwenken des Hebels 1 in der Richtung des Pfeiles C mit der Aussenseite des Bodens 7′′ in Berührung tretenden Oberfläche mit Stiften 14 versehen. Zum gleichen Zweck können auch Leisten 24 am Hebelteil 1′ vorgesehen sein.

Selbstverständlich können im Rahmen der Erfindung verschiedene konstruktive Änderungen vorgenommen werden. So besteht die Möglichkeit, den Boden der Pressräume austauschbar zu machen, so dass je nachdem ob die Frucht oder das Gemüse zerschnitten, zerdrückt oder entsaftet werden soll, ein mit Messern, Leisten oder Sieblöchern versehener Boden eingesetzt werden kann, wobei die Form und Grösse der Zwischenräume zwischen den Messern bzw. Leisten nach der gewünschten Art des Zerdrückens oder Zerschneidens der Frucht bzw. des Gemüses wählbar ist. Ein derartiger Boden ist in den Fig. 21 und 22 dargestellt. Gemäss diesen Figuren sind die Messer 21 in einem Rahmen 30 eingespannt, welcher auf einen bodenseitigen Fortsatz 31 des Pressraumes 12 aufgesetzt wird. Hiebei kann eine nicht dargestellte lösbare Rasteinrichtung vorgesehen sein, mit welcher der Boden fixiert wird, um beim Reinigen desselben durch Stifte von der Aussenseite her am Abheben von der Fläche 31 zu hindern. Bei austauschbaren Böden der Pressräume sind auch die Pressflächen für den Fall, dass sie mit in die Durchbrechungen des Bodens eingreifenden Erhebungen versehen sind, mit austauschbaren Einsätzen ausgestattet, damit die Erhebungen der Pressflächen der Drücker mit den Durchbrechungen des Bodens der Pressräume übereinstimmen. Gleiches gilt auch für Erhebungen zum Reinigen der Durchbrechungen oder Löcher, falls diese Erhebungen an der Aussenfläche des Hebels angeordnet sind. Eine derartige Ausbildung ist in Fig. 23 dargestellt. Bei dieser Ausführungsform ist der Einsatz als Plättchen 23 ausgebildet, welcher in Führungen 33 am Rücken des Drückers 3'' nach der Ausführungsform gemäss Fig. 19 einschiebbar ist, und die Erhebungen 24'' trägt. In gleicher Weise kann das Einsatzstück auch am Boden bzw. an der Pressfläche des Drückers 3 angeordnet sein, so zeigt Fig. 24 einen derartigen Einsatz 32', welcher mit Messern, Leisten od. dgl. 21 bzw. 20' versehen sein kann und in Führungen 33' einschiebbar ist.

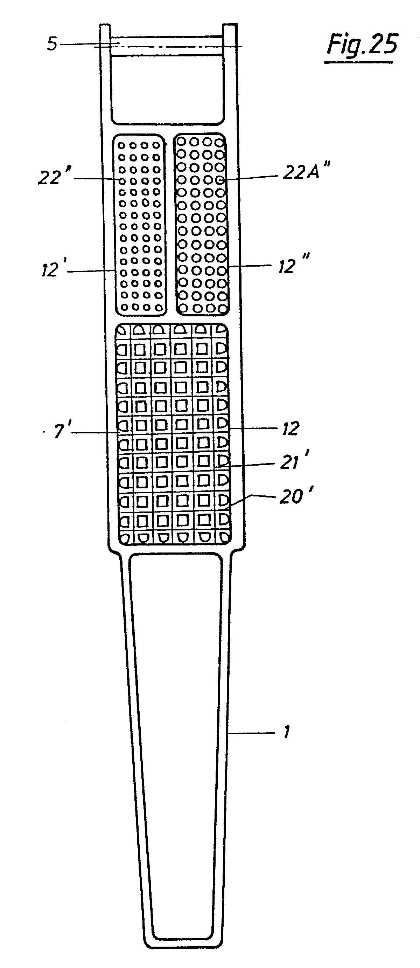

Die Ausführungsform der Handpresse nach Fig. 25 entspricht der Ausführungsform nach Fig. 18, mit dem Unterschied, dass die Pressräume anders angeordnet sind. Bei dieser Darstellung ist der Einfachheit halber nur der Hebel 1 in der Draufsicht auf die Pressräume dargestellt. Beim vorliegenden Ausführungsbeispiel ist der Pressraum 12 grösser als die Pressräume 12' und 12'' ausgebildet und mit kreuz und quer angeordneten Messern, Leisten, od. dgl. 20' bzw. 21' ausgestattet, wobei der diese Leisten, Messer od. dgl. tragende Boden 7' auswechselbar sein kann. Die Pressräume 12', 12'' sind nebeneinander und im Anschluss an den Pressraum 12 angeordnet. Sie liegen zwischen dem Pressraum 12 und dem Gelenk 5. Im vorliegenden Fall ist der Pressraum 12' mit einem Satz kleiner Löcher 22'' und der Pressraum 12'' mit einem Satz grösserer Löcher 22A'' ausgestattet. Der nicht dargestellte Hebel 2 ist mit entsprechenden Drückern versehen, die ähnlich wie die Drücker der der Ausführungsform nach Fig. 18 ausgestattet sein können, jedoch in der den Pressräumen entsprechende Anordnungen gelegen sind.

Die Zahl und Anordnung der Pressräume und der zugehörigen Drücker ist dem Konstrukteur der Handpresse überlassen. Sie können in beliebiger Anordnung und Anzahl nebeneinander und bzw. oder hintereinander angeordnet sein, wobei auch die Griffe 1, 2 ein- oder zweiarmig gewählt sein können.

Es besteht auch noch die Möglichkeit, dass jeder der beiden Hebel mindestens einen Pressraum sowie mindestens einen mit dem Pressraum des anderen Hebels zusammenwirkenden Drücker aufweist.

Weiters besteht die Möglichkeit, auch bei den Ausführungsformen der Drücker, Kolben, Stössel od. dgl. 3 bzw. 3' zum prismatischen oder scheibenförmigen Zertrennen der Frucht oder des Gemüses die Druckfläche der Drücker, Kolben, Stössel od. dgl. 3 bzw. 3' glatt auszuführen. In diesem Fall ist jedoch zweckmässig, die erwähnten Reinigungsstifte oder Leisten vorzusehen.

Schliesslich können auch bei einer doppelarmigen Ausbildung der Hebel die Arme gleich lang ausgeführt sein.

**Patentansprüche**

1. Handpresse für Gemüse oder Früchte mit zwei Hebeln (1, 2), die miteinander gelenkig verbunden sind und zumindest mit einem Teil ihrer Länge als Griffe dienen, wobei der eine Hebel einen mit Durchlassöffnungen (10, 10') im Boden für das Pressgut versehenen Pressraum (12, 12') zum Einlegen des auszupressenden Gutes und der andere einen beim Verschwenken der Hebel in den Pressraum eindringenden Drücker aufweist, wobei mindestens zwei Pressräume (12, 12') vorgesehen sind, dadurch gekennzeichnet, dass der eine Pressraum gegenüber dem anderen Pressraum (12, 12') mit unterschiedlichen Querschnittsöffnungen (10, 10') im Boden (7, 7') versehen ist.

2. Handpresse nach Anspruch 1, dadurch gekennzeichnet, dass mindestens einer der Hebel (1 bzw. 2) mit Erhebungen (14, 14') versehen ist, wobei mehrere Sätze von Erhebungen (14, 14') vorgesehen sein können, von denen je ein Satz je einer Öffnungsgruppe (10 bzw. 10') entspricht, so dass beim Verschwenken der Hebel (1 bzw. 2) entgegen der Pressrichtung die Erhebungen (14, 14') in die Öffnungen (10, 10') des Pressraumes (12, 12') eindringen und diese reinigen.

3. Handpresse nach Anspruch 1, dadurch gekennzeichnet, dass jeder Hebel (1 bzw. 2) mindestens einen der Pressräume (12 bzw. 12') sowie einen mit dem Pressraum des anderen Hebels zusammenwirkenden Drücker (3, 3') aufweist.

4. Handpresse nach Anspruch 1, dadurch gekennzeichnet, dass die Pressräume (12, 12') an einem Hebel (2) und die mit ihnen zusammenwirkenden Drücker (6, 6') am anderen Hebel (1) hintereinander angeordnet sind.

5. Handpresse nach Anspruch 1, dadurch gekennzeichnet, dass die Pressräume (12, 12') an einem Hebel (2) und die mit ihnen zusammenwirkenden Drücker (3) am anderen Hebel (1) nebeneinander angeordnet sind.

6. Handpresse nach Anspruch 1, dadurch gekennzeichnet, dass der Boden (7, 7') der Pressräume (12, 12') aus mindestens in einer Richtung in Abstand voneinander verlaufenden Stegen, Stäben oder Messern (20, 21) besteht.

7. Handpresse nach Anspruch 6, dadurch gekennzeichnet, dass die Drücker (3, 3') an ihrer in die Pressräume eindringenden Oberfläche Erhebungen (23, 23') aufweisen, welche dem Querschnitt der zwischen den Stegen, Stäben oder Messern vorhandenen Öffnungen (22, 22') entsprechen und am Ende des Pressvorganges in diese eindringen.

8. Handpresse nach Anspruch 1, dadurch gekennzeichnet, dass der Boden (7, 7') der Pressräume (12, 12') auswechselbar ist.

9. Handpresse nach Anspruch 2, dadurch gekennzeichnet, dass die in die Öffnungen (22, 22') der Böden (7, 7') der Pressräume (12, 12') eindringenden Erhebungen (23, 23') der Pressfläche der Drücker (3, 3') als austauschbare Einsätze ausgebildet sind.

10. Handpresse nach Anspruch 2, dadurch gekennzeichnet, dass die zum Zweck der Reinigung der Öffnungen (22'') der Böden (7'') der Pressräume (12'') dienenden Erhebungen (24'') als auswechselbare Einsatzteile ausgebildet sind.

**Claims**

1. A hand-operated squeezer for vegetables and fruit, comprising two levers (1, 2), which are pivotally connected to each other and at least in part of their length serve as handles, wherein one lever has a squeezing space (12, 12') formed in its bottom with passage openings (10, 10') for the material to be squeezed, whereas the other lever comprises a ram which during the pivotal movement of the levers enters the squeezing space, and wherein at least two squeezing spaces (12, 12') are provided, characterized in that the openings (12, 12') formed in the bottom (7, 7') of one squeezing space (12, 12') differ in cross-section from those formed in the bottom of the other queezing space (12, 12').

2. A hand-operated squeezer according to claim 1, characterized in that at least one of the levers (1 or 2) is formed with elevations (14, 14'), a plurality of sets of elevations (14, 14') may be provided and each of said sets corresponds to a group of openings (10 or 10'), so that a pivotal movement of the levers (1 or 2) opposite to the squeezing direction will cause the elevations (14, 14') to enter the openings (10, 10') of the squeezing space (12, 12') and to clean said openings.

3. A hand-operated squeezer according to claim 3, characterized in that each lever (1 or 2) is provided with at least one of the squeezing spaces (12 or 12') and with a ram (3, 3') which cooperates with the squeezing space of the other lever.

4. A hand-operated squeezer according to claim 1, characterized in that the squeezing spaces (12, 12') of one lever (2) and the rams (6, 6') provided on the other lever (1) and cooperating with said squeezing spaces are arranged in series.

5. A hand-operated squeezer according to claim 1, characterized in that the squeezing spaces (12, 12') of one lever (2) and the rams (3) which are provided on the other lever (1) and cooperate with said squeezing spaces are arranged one beside the other.

6. A hand-operated squeezer according to claim 1, characterized in that the bottom (7, 7') of the squeezing spaces (12, 12') consists of spaced apart webs, bars or knives (20', 21), which extends in at least one direction.

7. A hand-operated squeezer according to claim 6, characterized in that the rams (3, 3') are provided with elevations (23, 23') on that surface which enters the squeezing spaces, said elevations match the cross-section of the openings (22, 22') between the webs, rods or knives, and said elevations enter said openings at the end of the squeezing operation.

8. A hand-operated squeezer according to claim 1, characterized in that the bottom (7, 7') of the squeezing spaces (12, 12') is replaceable.

9. A hand-operated squeezer according to claim 2, characterized in that those elevations (23, 23') which are provided on the squeezing surface of the rams (3, 3') and enter the openings (22, 22') in the bottoms (7, 7') of the squeezing spaces (12, 12') consist of replaceable inserts.

10. A hand-operated squeezer according to claim 2, characterized in that those elevations (24'') which serve to clean the openings (22'') in the bottoms (7'') of the squeezing spaces (12'') consist of replaceable inserts.

**Revendications**

1. Presse à main pour légumes ou fruits, avec deux leviers (1, 2) qui sont reliés par articulation l'un à l'autre, avec une partie de leur longueur servant de poignées tandis que l'un des leviers présente une enceinte de pressage (12, 12') pourvue d'orifices de passage (10, 10') dans le fond pour le produit à presser, pour y placer le produit à presser et que l'autre levier présente un poussoir pénétrant dans l'enceinte de pressage au moment du pivotement du levier, tandis qu'au moins deux enceintes de pressage (12, 12') sont prévues, caractérisée en ce que l'une des enceintes de pressage est pourvue, dans le fond (7, 7') d'orifices (10, 10') de sections différentes de ceux existant dans le fond de l'autre enceinte de pressage (12, 12').

2. Presse à main selon la revendication 1, caractérisée en ce qu'au moins un des leviers (1 ou 2) est pourvu de saillies (14, 14') tandis que plusieurs jeux de saillies (14, 14') peuvent être prévus, chaque jeu correspondant à un groupe d'orifices (10 ou 10') si bien que, au moment du pivotement du levier (1 ou 2) à l'opposé de la direction de pressage, des saillies (14, 14') pénètrent dans les orifices (10, 10') de l'enceinte de pressage (12, 12') et nettoyent celle-ci.

3. Presse à main selon la revendication 1, caractérisée en ce que chaque levier (1 ou 2) présente au moins un poussoir (3, 3') fonctionnant avec les enceintes de pressage (12 ou 12') ainsi qu'un poussoir fonctionnant avec l'enceinte de pressage de l'autre levier.

4. Presse à main selon la revendication 1, caractérisée en ce que les enceintes de pressage (12, 12') sont disposées l'une derrière l'autre sur un levier (2) et les poussoirs (6, 6') fonctionnant avec celles-ci sur l'autre levier (1).

5. Presse à main selon la revendication 1, caractérisée en ce que les enceintes de pressage (12, 12') sont disposées l'une à côté de l'autre sur un levier (2) et les poussoirs (3) fonctionnant avec celles-ci sur l'autre levier (1).

6. Presse à main selon la revendication 1, caractérisée en ce que le fond (7, 7') des enceintes de pressage (12, 12') est constitué de nervures, de barreaux ou de couteaux (20, 21) disposés à l'écart les uns des autres au moins dans une direction.

7. Presse à main selon la revendication 6, caractérisée en ce que les poussoirs (3, 3') présentent, sur leur surface pénétrant dans les enceintes de pressage, des saillies (23, 23') qui correspondent à la section des orifices (22, 22') existant entre les nervures, les barreaux ou les couteaux et qui pénètrent dans ces orifices à la fin de l'opération de pressage.

8. Presse à main selon la revendication 1, caractérisée en ce que le fond (7, 7') des enceintes de pressage (12, 12') est amovible.

9. Presse à main selon la revendication 2, caractérisée en ce que les saillies (23, 23') de la surface de pressage des poussoirs (3, 3') pénétrant dans les orifices (22, 22') des fonds (7, 7') des enceintes de pressage (12, 12') sont constituées de pièces insérées amovibles.

10. Presse à main selon la revendication 2, caractérisée en ce que les saillies (24'') servant au nettoyage des orifices (22'') du fond (7'') de l'enceinte de pressage (12'') sont constituées de pièces insérées amovibles.

Fig. 1

Fig. 2

Fig. 3

Fig. 4

Fig. 5

0 143 103

Fig. 6

VIII

VII

1

10

15

VII

10'

4 8' 4'

VIII

Fig. 7

2

3 7 7' 3'

12 8' 12' 15

Fig. 8

5 1

14'

3

8'

15

2

15

Fig. 9

1

0 143 103

Fig. 10

Fig. 11

0 143 103

Fig. 14

Fig. 12

Fig. 13

Fig. 15

1″

1

14

5

A

16

17

2

Fig. 16

3    6    16    17

XV

1

XV

3′    6′

14    4

10

Fig. 17

2

4′

10′

14′

_Fig.18_

_Fig.20_

C

_Fig.19_

_Fig.21_

_Fig.22_

_Fig.23_

_Fig.24_

0 143 103

23

Fig.25